# EUROPEAN PATENT APPLICATION

(11) **EP 2 007 034 A2**
(43) Date of publication of application: **24.12.2008**
(21) Application number: 07714221.4
(22) Date of filing: 15.02.2007
(51) Int. Cl.: H04B 7/26, H04Q 7/22

(54) **MOBILE COMMUNICATION SYSTEM, RADIO BASE STATION DEVICE, AND TRANSMISSION POWER CONTROL METHOD**

(30) Priority: 10.03.2006 JP 2006066034
(71) Applicant: NEC Corporation, Minato-ku Tokyo 108-8001 (JP)
(72) Inventor: TAKAGI, Kenki, Minato-ku Tokyo, 108-8001 (JP)
(74) Representative: Glawe, Delfs, Moll
(86) International application number: PCT/JP2007/052691
(87) International publication number: WO 2007/105402

(57) **Abstract**

A radio base station control device instructs the radio base station device of a handover destination to establish a radio link with a mobile station terminal and requests the radio base station device of a handover source to report transmission power information concerning the down radio link to the mobile station terminal. In response to the request from the radio base station control device, the radio base station device of the handover source reports the transmission power information concerning the down radio link to the radio base station control device. The radio base station control device transfers the transmission power information from the radio base station device of the handover source to radio base station device of the handover destination. The radio base station device of the handover destination controls the transmission power of down link to the mobile station terminal by using the transferred transmission power information until synchronization of the up radio link is established.

## Description

### Technical Field

The present invention relates to a handover operation in a mobile communication system for controlling the transmission power from a radio base station device.

### Background Art

In the typical mobile communication system of a W-CDMA (Wideband Code Division Multiple Access) method, a plurality of radio base station devices are disposed at every several to tens km to constitute an area.

In the W-CDMA mobile communication system, a handover is performed to prevent disconnection of communication when the mobile station terminal moves between the radio base station devices. The W-CDMA mobile communication system performs the handover based on the reception level of a common pilot channel of each cell at the mobile station terminal. Also, in the W-CDMA mobile communication system, the transmission power of individual channels transmitted from the radio base station device to the mobile station terminal is adaptively controlled (e.g., refer to Japanese Patent Laid-Open No. 11-340910).

The mobile station terminal monitors the reception level of the common pilot channel power transmitted from the radio base station device of each cell, and transmits a handover request to the radio base station control device, if the reception level of the common pilot channel of a certain cell exceeds a predetermined threshold. In the W-CDMA mobile communication system in which the mobile station terminal can be connected to a plurality of radio base station devices at the same time, this handover request is made to add the cell to which the mobile station terminal is connected. At the moment of this handover request, the mobile communication system starts the handover operation.

Herein, the radio base station to which the mobile station terminal is currently connected is called the radio base station device of a handover source, and the cell is called the cell of a handover source. Also, the radio base station device to which the mobile station terminal is going to be connected is called the radio base station device of a handover destination, and the cell is called the cell of a handover destination.

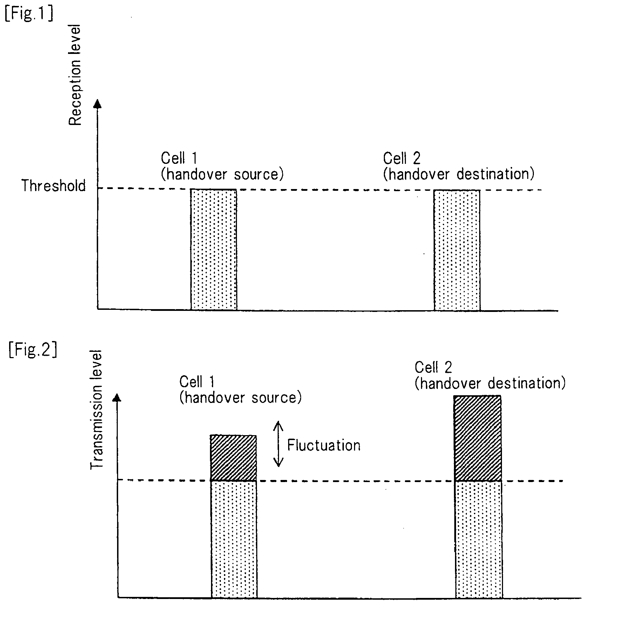

Figure 1 is a view showing the relationship between the reception level of the common pilot channel of the handover source and the threshold of the reception level of the common pilot channel at the mobile station terminal during handover, and the relationship between the reception level of the common pilot channel of the handover destination and the threshold of the reception level of the common pilot channel at the mobile station terminal during handover.

Generally, the threshold of the reception level at the mobile station terminal is set so that the reception level of the common pilot channel in the cell of the handover destination may be equal to or higher than the reception level of the common pilot channel in the cell of the handover source. Therefore, when the handover is started, the reception level of the common pilot channel of the handover destination (cell 2) is equal to or higher than the reception level of the common pilot channel of the handover source (cell 2), as illustrated in Figure 1.

Receiving a handover request from the mobile station terminal, the radio base station control device instructs the radio base station device of the handover destination to establish the radio link with the mobile station terminal. At this time, the mobile station terminal reports the information on the reception level of the common pilot channel power transmitted from the radio base station device of the handover destination to the radio base station control device. The radio base station control device decides an initial value of the transmission power of an individual channel transmitted from the radio base station device of the handover destination, based on this information, and reports it to the radio base station device of the handover destination.

The initial value of the transmission power of an individual channel transmitted from the radio base station device of the handover destination is decided such that the relative value of the transmission power of an individual channel transmitted from the radio base station device of the handover source to the power of common pilot channel and the relative value of the transmission power of individual channels transmitted from the radio base station device of the handover destination to the power of common pilot channel may coincide, for example.

### Disclosure of the Invention

The radio base station device of the handover destination makes the transmission on the individual channel at the initial value of the transmission power reported from the radio base station control device, until synchronization of the up radio link with the mobile station terminal is established. However, the radio base station device of the handover source continues to perform an inner loop power control, even while the radio base station control device is performing a process for adding the radio base station device of the handover destination, so that the transmission power of individual channels from the radio base station device of the handover source is varied.

Therefore, there is a difference between the relative value of the transmission power of individual channels transmitted from the radio base station device of the handover source relative to the power of common pilot channel and the relative value of the transmission power of individual channel transmitted from the radio base station device of the handover destination relative to the power of common pilot channel during a handover process.

Figure 2 is a view showing the relationship between the transmission level of individual channels of the handover source and the transmission level of individual channels of the handover destination during the handover process in the mobile communication system. Referring to Figure 2, there is a difference between the transmission level of an individual channel of the handover source (cell 1) and the transmission level of an individual channel of the handover destination (cell 2), which appears in the difference between the relative values as described above.

If the difference between the relative values is greater, the operation at the mobile station terminal is adversely affected, causing the lower utilization efficiency of the radio resources or instable communication.

It is an object of the invention to provide a mobile communication system that can prevent lower utilization efficiency of the radio resources or instable communication during handover.

In order to accomplish the above object, the present invention provides a mobile communication system for adaptively controlling the transmission power of individual channel transmitted to a mobile station terminal, comprising a radio base station control device and a plurality of radio base station devices.

The radio base station control device instructs a radio base station device of a handover destination to establish a radio link with the mobile station terminal and requests a radio base station device of a handover source to report transmission power information concerning the down radio link to the mobile station terminal, upon receiving a handover request from the mobile station terminal. Also, the radio base station control device transfers the transmission power information to the radio base station device of the handover destination, upon receiving the transmission power information from the radio base station device of the handover source.

The radio base station device reports the transmission power information, concerning the down radio link from itself to the mobile station terminal, to the radio base station control device in response to a request from the radio base station control device, in the case of the handover source, during the handover of the mobile station terminal. Also, the radio base station device controls the transmission power of down link to the mobile station terminal by using the transmission power information transferred from the radio base station control device, until synchronization of the up radio link is established, in establishing the radio link with the mobile station terminal based on an instruction from the radio base station control device, in the case of the handover destination.

### Brief Description of the Drawings

Figure 1 is a view showing the relationship between the reception level of the common pilot channel of a handover source and the threshold of the reception level of the common pilot channel at a mobile station terminal during a handover process and the relationship between the reception level of the common pilot channel of a handover destination and the threshold of the reception level of the common pilot channel at a mobile station terminal during a handover process;
Figure 2 is a view showing the relationship between the transmission level of individual channels of the handover source and the transmission level of individual channel of the handover destination during the handover process in a mobile communication system;
Figure 3 is a block diagram showing the configuration of a mobile communication system according to an exemplary embodiment;
Figure 4 is a block diagram showing the configuration of a radio base station device according to the exemplary embodiment;
Figure 5 is a sequence chart showing a handover operation in the mobile communication system according to the exemplary embodiment; and
Figure 6 is a view showing the reception level of an individual channel from the radio base station device of the handover source and the radio base station device of the handover destination during the handover process according to the exemplary embodiment.

### Best Mode for Carrying Out the Invention

The exemplary embodiment will be described below in detail with reference to the drawings.

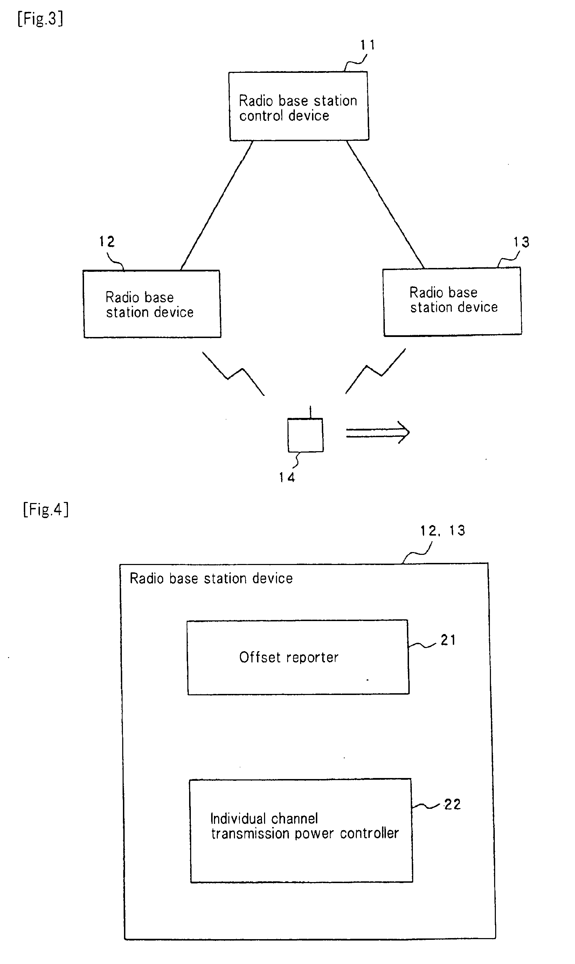

Figure 3 is a block diagram showing the configuration of a mobile communication system according to the exemplary embodiment. Referring to Figure 3, the mobile communication system of the exemplary embodiment comprises radio base station control device 11 and radio base station devices 12 and 13.

Radio base station control device 11 is connected to a plurality of radio base station devices 12 and 13, and connected to mobile station terminal 14 via radio base station devices 12 and 13. Radio base station control device 11 controls radio base station devices 12 and 13, and performs a process for call connecting or disconnecting and a handover process of mobile station terminal 14.

In the handover process, radio base station control device 11 instructs the radio base station device of a handover destination to establish a radio link with mobile station terminal 14 and requests the radio base station device of a handover source to report the transmission power offset information, upon receiving a handover request from mobile station terminal 14. The transmission power offset information includes an offset value of the transmission power of individual channels in relation to the transmission power of a common pilot channel. Also, radio base station control device 11 designates a transmission interval of the transmission power offset information, when requesting the radio base station device of the handover source to report the transmission power offset information.

Since the transmission power offset information is transmitted at the designated transmission interval from the radio base station device, radio base station control device 11 transfers the received transmission offset information to radio base station device of the handover destination.

Radio base station device 12, 13 establishes the radio link with mobile station terminal 14 within the self cell to make the communication. Also, radio base station device 12, 13 performs a handover process in accordance with an instruction from radio base station control device 11. In the handover process, radio base station device 12, 13 may be a handover source or handover destination.

In the case of the handover source, radio base station device 12, 13 is requested to report the transmission power offset information by radio base station control device 11, and upon receiving this request, transmits the transmission power offset information including the offset value of the transmission power of individual channel of its own in relation to the transmission power of the common pilot channel at the designated fixed transmission interval to radio base station control device 11.

Also, in the case of the handover destination, radio base station device 12, 13 establishes the radio link with mobile station terminal 14 in accordance with an instruction from radio base station control device 11. At this time, radio base station device 12, 13 adjusts the transmission power of individual channels by using the offset value included in the transmission power offset information reported from radio base station control device 11, until synchronization of the up radio link with mobile station terminal 14 is established. That is, radio base station device 12, 13 makes the transmission on individual channel at the transmission power having the offset value in respect of the transmission power of the common pilot channel, until synchronization of the up radio link is established. If synchronization of the up radio link is established, an inner loop power control is enabled, and after that, radio base station device 12, 13 controls the transmission power of individual channels under the inner loop power control.

Since the transmission power offset information is transmitted at the above transmission interval from radio base station control device 11, radio base station device 12, 13 updates the transmission power value of individual channels every time.

Figure 4 is a block diagram showing the configuration of radio base station device according to the exemplary embodiment. Referring to Figure 4, radio base station device has offset reporter 21 and individual channel transmission power controller 22.

When radio base station device becomes a handover source in the handover process, offset reporter 21 reports its own transmission power offset information to radio base station control device 11 at the designated transmission interval, upon receiving a request from radio base station control device 11.

Individual channel transmission power controller 22 controls the transmission power of individual channels. In the normal operation after the radio link with mobile station terminal 14 is established, the transmission power of individual channels is adaptively controlled under inner loop power control. When a radio base station device becomes the handover source in the handover process, individual channel transmission power controller 22 adaptively controls the transmission power of an individual channel under the inner loop power control as in normal operation.

On the other hand, when radio base station device becomes a handover destination in the handover process, individual channel transmission power controller 22 updates the transmission power of individual channel by using the transmission power offset information reported regularly from radio base station control device 11. And if synchronization of the up radio link is established, individual channel transmission power controller 22 shifts to normal inner loop power control.

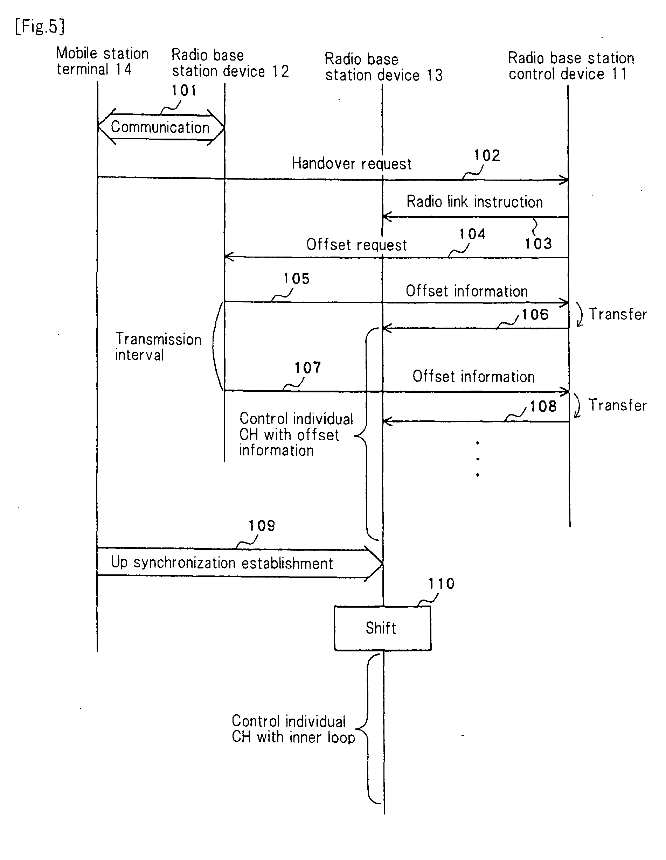

Figure 5 is a sequence chart showing a handover operation in the mobile communication system according to the exemplary embodiment. Herein, radio base station device 12 is a handover source, and radio base station device 13 is a handover destination. Accordingly, mobile station terminal 14 makes the communication via radio base station device 12 in the initial state (step 101).

Herein, mobile station terminal 14 transmits a handover request for radio base station device 13 to radio base station control device 11 due to a change in the state of the radio line caused by a movement of mobile station terminal (step 102). Radio base station control device 11, upon receiving the handover request, instructs radio base station device 13 of the handover destination to establish the radio link (step 103), and requests radio base station device 12 of the handover source to report the transmission power offset information (step 104).

Radio base station device 12 of the handover source that requested for the transmission power offset information reports the transmission power offset information including the transmission power offset value of individual channel of its own to radio base station control device 11 (step 105). Radio base station control device 11, upon receiving the transmission power offset information, transfers it to radio base station device 13 of the handover destination (step 106). Radio base station device 12 of the handover source reports the transmission power offset information to radio base station control device 11 at a fixed transmission interval (step 107), and radio base station control device 11 transfers it to radio base station device 13 of the handover destination (step 108).

Radio base station device 13 controls the transmission power of an individual channel based on the offset value included in the transmission power offset information of the handover source from the time when it starts to receive the transmission power offset information of the handover source until synchronization of the up radio link is established.

And if synchronization of the up radio link is established (step 109), radio base station device 13 of the handover destination shifts from controlling the transmission power of an individual channel that uses the transmission power offset information of the handover source to normal inner loop power control (step 110).

According to the exemplary embodiment as described above, in the handover process, radio base station device 12 of the handover source regularly reports the transmission power offset value of individual channel to radio base station device 13 of the handover destination, and radio base station device 13 of the handover destination controls the transmission power of its own of the individual channel by using the reported offset value of the handover source, until synchronization of the up radio link from mobile station terminal 14 is established, and shifts to inner loop power control, when synchronization of the up radio link is established.

Accordingly, even if the transmission power of individual channel of the handover source fluctuates during the handover process, radio base station device 13 of the handover destination can control the transmission power of the individual channel to follow the fluctuation.

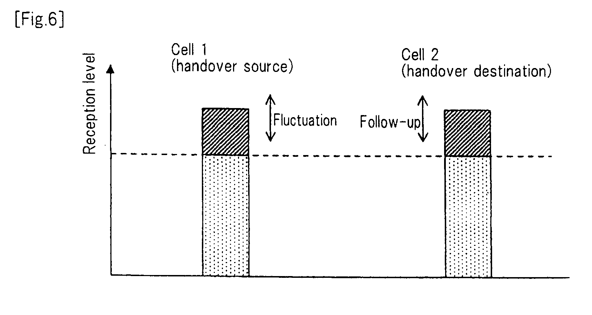

Figure 6 is a view showing the reception level of an individual channel from radio base station device of the handover source and radio base station device of the handover destination during the handover process according to the exemplary embodiment. According to the exemplary embodiment, even if the transmission power of individual channel of the handover source fluctuates, the transmission power of an individual channel of the handover destination follows the fluctuation, as shown in Figure 6.

Thereby, it is possible to suppress a difference occurring between the relative value of individual channel transmission power of the handover source relative to the common pilot channel power and the relative value of individual channel transmission power of the handover destination relative to the common pilot channel power during the handover process. As a result, it is possible to prevent the lower utilization efficiency of the radio resources during handover or instable communication.

Though the transmission power offset information including the offset value of the transmission power of the individual channel in relation to the transmission power of the common pilot channel is reported from the handover source to the handover destination in the exemplary embodiment, the invention is not limited to the exemplary embodiment. As another example, the transmission power value itself of the individual channel, not the offset value, may be reported.

## Claims

1. A mobile communication system for adaptively controlling transmission power of an individual channel transmitted to a mobile station terminal, comprising:
a radio base station control device that instructs a radio base station device of a handover destination to establish a radio link with said mobile station terminal and requests a radio base station device of a handover source to report transmission power information concerning a down radio link to said mobile station terminal upon receiving a handover request from said mobile station terminal, and transfers said transmission power information to said radio base station device of the handover destination upon receiving said transmission power information from said radio base station device of the handover source; and
a plurality of radio base station devices that each reports the transmission power information, concerning the down radio link from itself to said mobile station terminal, to said radio base station control device in response to a request from said radio base station control device, in the case of said radio base station being the handover source during the handover of said mobile station terminal, or each controls the transmission power down to said mobile station terminal by using said transmission power information transferred from said radio base station control device, until synchronization of the up radio link is established, in establishing the radio link with said mobile station terminal based on an instruction from said radio base station control device, in the case of said radio base station being the handover destination.

2. The mobile communication system according to claim 1, wherein said radio base station device reports said transmission power information to said radio base station control device at a fixed time interval in response to a request from said radio base station control device in the case of said radio base station being the handover source.

3. The mobile communication system according to claim 1, wherein said transmission power information includes an offset value of the transmission power of an individual channel from said radio base station device down to said mobile station terminal relation to the transmission power of a common pilot channel.

4. The mobile communication system according to claim 1, wherein said radio base station device shifts from the controlling transmission power of down link to said mobile station terminal to control of inner loop, when synchronization of said up radio link is established, in the case of said radio base station being the handover destination.

5. A radio base station device for use in a mobile communication system for adaptively controlling transmission power of an individual channel transmitted to a mobile station terminal, comprising:
a transmission power information reporter for reporting transmission power information, concerning a down radio link from the self device to said mobile station terminal, to the radio base station device of a handover destination, when the self device becomes a handover source, in the handover of said mobile station terminal; and
a transmission power controller for controlling the transmission power of down link to said mobile station terminal by using said transmission power information reported from the transmission power information reporter of the radio base station device of the handover source, until synchronization of the up radio link is established, when the self device becomes the handover destination and establishes the radio link with said mobile station terminal during the handover of said mobile station terminal.

6. The radio base station device according to claim 5, wherein said transmission power information reporter reports said transmission power information to said radio base station control device of the handover destination at a fixed time interval.

7. The radio base station device according to claim 5, wherein said transmission power information includes an offset value of the transmission power of an individual channel from said radio base station device down to said mobile station terminal relative to the transmission power of a common pilot channel.

8. The radio base station device according to claim 5, wherein said transmission power controller shifts from controlling transmission power of down link to said mobile station terminal to inner loop control, when synchronization of said up radio link is established.

9. A transmission power control method for use in a mobile communication system for adaptively controlling transmission power of an individual channel transmitted to a mobile station terminal, comprising:
reporting transmission power information concerning a down radio link from a handover source to said mobile station terminal from the radio base station device of the handover source to the radio base station device of a handover destination during the handover of said mobile station terminal; and
controlling the transmission power down to said mobile station terminal by using said transmission power information reported from said radio base station device of the handover source, until synchronization of the up radio link is established, in establishing the radio link with said mobile station terminal at said radio base station device of the handover destination.

10. The transmission power control method according to claim 9, wherein said radio base station device of the handover source reports said transmission power information to said radio base station device of the handover destination at a fixed time interval.

11. The transmission power control method according to claim 9, wherein said transmission power information includes an offset value of the transmission power of an individual channel from said radio base station device down to said mobile station terminal in relation to the transmission power of a common pilot channel.

12. The transmission power control method according to claim 9, wherein said radio base station device of the handover destination shifts from the controlling the transmission power of down link to said mobile station terminal to inner loop control, when synchronization of said up radio link is established.
